# EUROPEAN PATENT SPECIFICATION

(11) **EP 3 958 051 B1**
(45) Date of publication and mention of the grant of the patent: **11.06.2025**
(21) Application number: 20791589.3
(22) Date of filing: 07.04.2020
(51) Int. Cl.: G02F 1/1523, G02F 1/15, G02F 1/1506, G02F 1/1524

(54) **ELECTROCHEMICAL DEVICE**
ELEKTROCHEMISCHE VORRICHTUNG
DISPOSITIF ÉLECTROCHIMIQUE

(30) Priority: 16.04.2019 JP 2019078120
(43) Date of publication of application: 23.02.2022
(73) Proprietor: Stanley Electric Co., Ltd., Meguro-ku Tokyo 153-8636 (JP)
(72) Inventor: HIRANO, Tomoya, Tokyo 153-8636 (JP); HASEGAWA, Yuki, Tokyo 153-8636 (JP)
(74) Representative: Emde, Eric
(86) International application number: PCT/JP2020/015662
(87) International publication number: WO 2020/213476

(56) References cited:
- CN-A- 109 193 030
- JP-A- 2016 080 784
- JP-A- 2018 017 781
- US-A- 5 764 401

## Description

### Technical Field

The present disclosure relates to an electrochemical device, including an electrolytic solution between opposing electrodes and being capable of depositing/solving a mirror layer of Ag by an electrochemical reaction.

### Background Art

There is provided a display device or a dimmer filter capable of controlling the intensity of transmitted light by using an electrodeposition (ED) material and varying optical properties of the ED material.

A display device is provided, including a transparent electrode on an opposing surface of a pair of glass substrates, and an electrolytic solution containing a solvent, a supporting electrolyte, an ED material containing Ag, and a mediator containing Cu, between the electrodes, and being capable of precipitating an Ag mirror surface on a negative electrode by applying a predetermined voltage across the electrodes, thereby extinguishing the mirror surface by voltage release.

The transparent electrode having light transmission properties can be formed by indium tin oxide (ITO), indium zinc oxide (IZO) or the like. An ED material containing Ag may use AgNO₃, AgClO₄, AgBr or the like.

The mediator containing Cu may use CuCl₂, CuSO₄, CuBr₂ or the like. A mediator refers to any material that oxidizes/reduces with electrochemically lower energy than silver and is preferably a salt of a divalent copper ion, and may use CuCl₂, CuSO₄, CuBr₂ or the like.

The supporting electrolyte may be any electrolyte capable of promoting oxidation/reduction reaction or the like of an ED material, and may use, for example, a lithium salt such as LiCl, a potassium salt such as KCl, a sodium salt such as NaCl or the like.

The solvent may be one capable of stably holding an ED material or the like, and may use, for example, a polar solvent such as water, a nonpolar organic solvent, an ionic liquid, an ionic conductive polymer, a polymer electrolyte or the like.

In the absence of an applied voltage, an ED element is transparent to light. When Ag precipitates on a flat transparent electrode by application of a predetermined voltage, a mirror surface appears. When the ED element is left in the absence of an applied voltage or in a state under application of a voltage of reverse polarity, the precipitated Ag layer solves to recover a transparent state. There is a need for increasing as much as possible a mirror finishing response speed (an ON response speed) upon power ON and a transparentizing response speed (an OFF response speed) upon power OFF.

Concerning an Ag-precipitating ED element using a Cu mediator, there is a proposal to improve the OFF response speed by using, as a solvent, a mixed solvent in which one or more types of non-water solvent, for example, N,N-dimethylformamide (DMF), to dimethyl sulfoxide (DMSO), as disclosed, for example, in the International Publication No. WO2016/021190.

An ED element using a Cu mediator appears a little bit colored yellow. This is considered to be due to the influence of a mediator containing Cu such as CuCl₂ or the like. To form an ED element having a high transmittance, there is desirably no coloring by a mediator.

There is a proposal to avoid coloring of an electrolytic solution and improve a transmittance by using a mediator containing Ge (such as GeCl₄) or Ta (such as TaCl₅) instead of a mediator containing Cu, as disclosed, for example, in the Unexamined Japanese Patent Application Publication No. 2018-017781.

US 5 76 4401 A discloses an optical apparatus which includes a first electrode that can be kept in a transparent state in a visible light region, and a second electrode electrically separated from the first electrode. A space is provided between the first and second electrodes. A certain function is used to provide a driving potential to the first and second electrodes. An electrolyte is poured into the space between the electrodes. The electrolyte is composed of a solution prepared by dissolving a silver salt in at least one type of solvent selected from a group consisting of dimethylformamide, diethylformamide, N, N-dimethylacetamide, N-methylpropionamide, N-methylpyrrolidone, 2-ethoxyethanol, and 2-methoxyethanol. By use of this electrolyte, silver is precipitated and dissolved under driving control over the first and second electrodes.

### Summary of Invention

By using, for example, the above-mentioned mixed solvent, it is possible to improve the OFF response speed although coloring and a low transmittance of an electrolytic solution have not been improved. On the other hand, while it is possible to improve the OFF response speed by using a mixed organic solvent containing mainly DMSO, the coagulating point of DMSO is 18°C and the mixed solvent cannot be used, as is, at low temperatures. While it is possible to decrease the coagulating point by arranging the composition of a mixed solvent, there are high limitations of the composition for used at low temperatures of -30°C or less, which hinders improvement of the OFF response speed.

While it is possible to avoid coloring of an electrolytic solution thus offering a high transmittance in a transmitting state by using the above-mentioned mediators containing Ge or Ta, the OFF response speed is low, which will cause the observer to feel that the switching speed is low. For example, the OFF response speed of an N,N-dimethylacetamide (DMA) electrolytic solution using a mediator containing Ta is 47.1 seconds, and the OFF response speed is still lower in the case of a mediator containing Ge.

An example embodiment of the present disclosure aims to provide a high OFF response speed and improve a transmittance in a transparent state at the same time.

In accordance with the present invention, an electrochemical device as set forth in the appended claims is provided. According to an example embodiment, there is provided an electrochemical device including a first substrate and a second substrate disposed face-to-face and each including an opposing electrode disposed on an opposing surface, and an electrolytic solution provided between the first substrate and the second substrate containing a solvent, a supporting electrolyte, a mediator, and an electrodeposition material containing Ag wherein the mediator contains one or more of Mo, Sn, Nb, Sb, and Ti.

For example, while DMA is used as a solvent, a high OFF response speed is available and a high transmittance is obtained in a transparent state when any one of Mo, Sn, Nb, Sb and Ti is used as a mediator.

### Brief Description of Drawings

FIGS 1A to 1C are a cross-sectional view, a partial enlarged view, and a plan view of an electrochemical device according to an example embodiment;
FIG. 2A is an electrical diagram of the electrochemical device according to the example embodiment;
FIGS 2B and 2C are schematic circuit diagrams illustrating two operating states of the electrochemical device according to the example embodiment;
FIG. 3 is a chart illustrating the transmittance, ON response speed and OFF response speed according to a reference example and the example embodiment; and
FIGS. 4A and 4B are perspective views illustrating a combiner of a head-up display and an example of application of an ED cell to an ND filter for the head-up display.

### Reference Signs List

10, 20Substrate
12, 22 Transparent electrode
15 Encapsulant
17 Spacer
30 Electrolytic solution
35 Ag (mirror) layer.

### Description of Embodiments

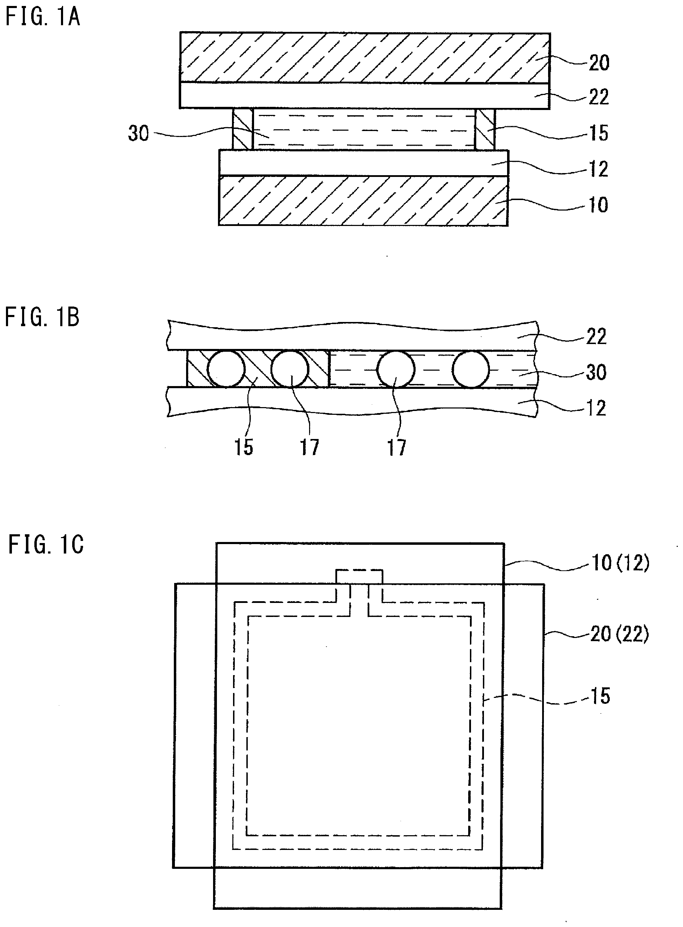

As illustrated in FIG. 1A, a cell is formed in which a glass substrate 10 including a flat transparent (ITO) electrode 12 and a glass substrate 20 including a flat transparent electrode 22 are glued together by the encapsulant 15 while being opposed to each other. Resistivity of each electrode shall be, for example, 5Ω/ or less. The encapsulant is a UV-curable resin TB3035B from ThreeBond Co., Ltd.

As illustrated in FIG. 1B, a glass beads spacer 17 having a diameter of 100 µm is mixed by 3wt% with an encapsulant 15 and a distance between the electrodes 12 and 22 is specified to be approximately 100 µm. The spacer 17 is also dispersed, as required, between the electrodes 12 and 22 outside the encapsulant 15.

As illustrated in FIG. 1C, a substrate 10 (12) and a substrate 20 (22) each have a section protruding from an opposing substrate and the protruding section can be used to electrically draw the electrodes 12, 22 with ease.

As a solvent capable of keeping a liquid phase in a temperature range of a melting point of -20°C or less and a boiling point of 100°C or more, dimethylacetamide DMA is selected. AgBr of 200 mM as an ED material containing Ag, LiBr of 800 mM as a supporting electrolyte, and selected mediator species of 30 mM are dissolved in a solvent to prepare an electrolytic solution.

As mediators according to the example embodiment, MoCl₅ (Mo has an ionic valence of 5), SnCl₄ (Sn has an ionic valence of 4), SbCl₅ (Sb has an ionic valence of 5), NbCls (Nb has an ionic valence of 5), and TiI₄ (Ti has an ionic valence of 4) are used. Cu[II] according to the related art and Ta[V] employed in previous research are also used as mediators according to the reference example, together with Mo[V], Sn[IV], Sb[V], Nb[V] and Ti[IV].

An electrolytic solution 30 is injected into an empty cell by using the vacuum-pressure impregnation method. An injection port after the injection is encapsulated with UV-curable resin TB3035B from ThreeBond Co., Ltd. to configure an electrochemical device. The electrochemical device is in a transparent state in the absence of an applied voltage and transmissive to light. The capillary injection method, the one drop filling (ODF) method or the like may be used instead of the vacuum-pressure impregnation method.

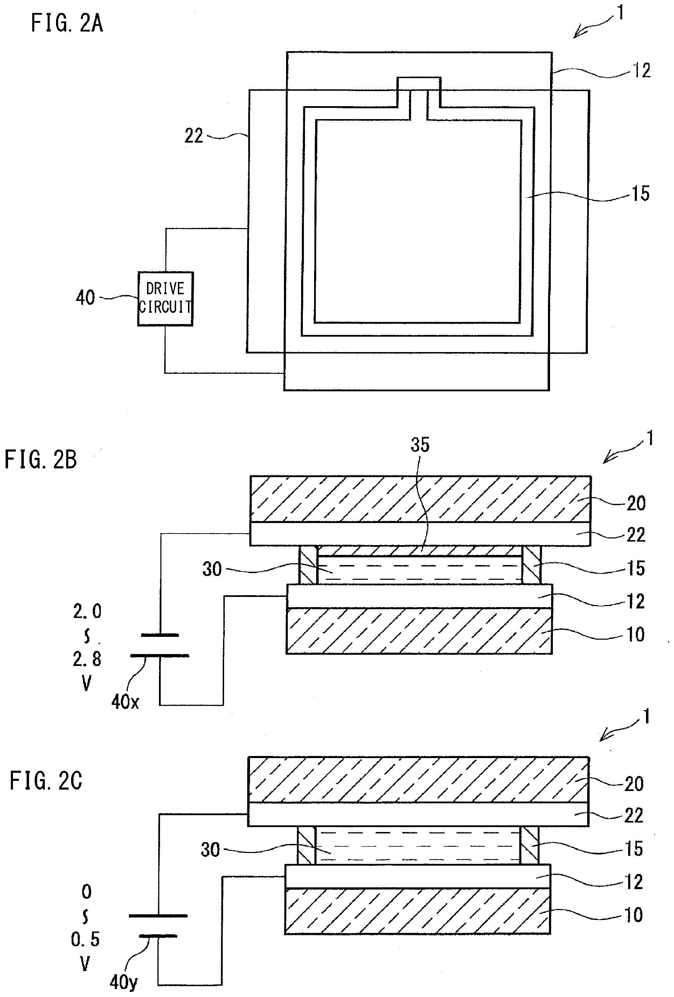

FIG. 2A illustrates an electrochemical device 1 to which a drive circuit is connected. A drive circuit 40 is connected between the opposing electrodes 12, 22 and the electrolytic solution 30 is enclosed in a cell space 100 µm thick surrounded by the encapsulant 15.

As illustrated in FIG. 2B, a drive circuit 40x in an ON state applies a DC drive voltage of 2.0 to 2.8 V onto the electrochemical device 1. In the figure, the electrode 22 on an upper substrate 20 works as a negative pole and the electrode 12 on a lower substrate 10 works as a positive pole. An Ag layer 35 deposits on the electrode 22 on the negative pole side to form a mirror surface. When observed from the side of the upper substrate 20, light incident from the upper side is reflected by the Ag layer 35 without reaching the electrolytic solution 30 in the electrochemical device 1.

As illustrated in FIG. 2C, a drive circuit 40y in an OFF state applies a reverse voltage of 0 to -0.5 V onto the electrochemical device 1. The deposited Ag layer is dissolved and the electrochemical device 1 restores to a transparent state. Light incident from the upper side onto the electrochemical device 1 passes through the upper substrate 20, the transparent electrode 22, the electrolytic solution 30, the transparent electrode 12 and the lower substrate 10 and is emitted downward.

First, a transmittance of each sample in a state where a drive circuit is not operating is evaluated by using a compact fiber spectroscopic measuring device USB 4000. A light intensity without a sample is assumed as 100% and a transmittance is obtained from a relative light intensity of transmitted light that has passed through a sample in a resting state. As the transmittance, a visual sensitivity transmittance is calculated.

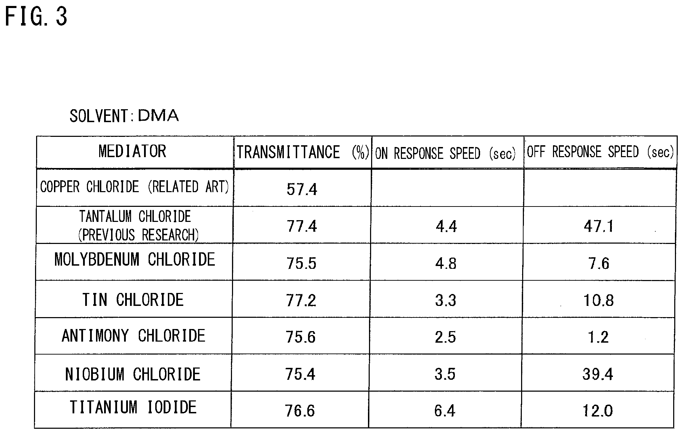

Transmittance data in a transparent state obtained through measurement are summarized in the chart of FIG. 3. Samples using-copper chloride according to the related art appear yellowish and have a low transmittance of 57.4%. Samples using tantalum chloride according to previous research show a high transmittance of 77.4%. Samples according to the example embodiment shows a high transmittance of 75% or more without exception, and the cell has a transparent appearance.

The ON response speed is defined as a time (in seconds) required until the transmittance drops to 10% of an initial transmittance following application of an ON voltage in a transparent state. The OFF response speed is defined as a time (in seconds) required until the transmittance increases from 15% to 90% of the initial transmittance following application of an OFF voltage in a state where a mirror surface is formed.

When an electrochemical element is used as a smart window as a window including, for example, a dimming function, a high ON response speed and a high OFF response speed are desirable for earlier practices of desired shading or daylighting. While it is possible to decrease an original response speed, it is often practically difficult to increase the original response speed.

The two rightmost columns of FIG. 3 illustrate the ON response speed and OFF response speed, respectively. When a DMA solvent is used and molybdenum chloride, tin chloride, antimony chloride, niobium chloride, or titanium iodide is used as a mediator, the ON response speed is within several seconds without exception, which shows a sufficient usability. The OFF response speed is, although slightly different between samples, 40 seconds or less without exception. This clearly tells an improvement from a sample using tantalum chloride according to the previous research.

From these experiment results, it is possible to assume that the use of a salt containing Mo[V], Sn[IV], Sb[V], Nb[V], or Ti[IV] as a mediator is effective. Materials containing Mo[V] are MoCl₅, MoBr₅, MoI₅, Mo(NO₃)₅ and the like. Materials containing Sn[IV] are SnCl₄, SnBr₄, SnI₄, Sn (NO₃)₄ and the like. Materials containing Sb[V] are SbCl₅, SbBr₅, SbI₅, Sb (NO₃)₅ and the like. Materials containing Nb[V] are NbCl₅, NbBr₅, NbI₅, Nb (NO₃)₅ and the like. Materials containing Ti[IV] are TiCl₄, TiBr4, TiI₄, Ti (NO₃)₄ and the like.

Note that a solvent is not limited to DMA. When used for an electrochemical element to be used in contact with open air, a solvent only needs to keep a liquid phase in a temperature range of around -20°C to 100°C and stably hold an ED material or the like. For example, triethylene glycol dimethyl ether TGM, propylene carbonate PC, or N-methylpyrrolidone NMP may be used.

An Ag salt is not limited to AgBr. AgNO₃, AgClO₄, AgCl or the like may be used instead of AgBr. A supporting salt is not limited to LiCl. An Li salt such as LiNO₃, LiClO₄, LiBr, LiI or the like instead of LiCl, an Na salt such as NaNO₃, NaClO₄, NaCl, NaBr, NaI or the like, and a K salt such as KNO₃, KClO₄, KCl, KBr, KI or the like may be used.

A thickness of an electrolytic solution is not limited to 100 µm. By selecting a spacer diameter, it is possible to change an inter-electrode distance (thickness of electrolytic solution). Practically, the thickness of an electrolytic solution may be selected within the range of 1 µm to 1000 µm, both inclusive.

While an example case has been described where an Ag layer is deposited on an Ag layer on a flat transparent electrode to form a mirror surface, a dimming function can be provided except by a mirror surface. An Ag layer may be deposited on a transparent electrode having asperities. It is also possible to deposit Ag on a base electrode having submicron asperities to form an Ag layer having black color featuring strong light absorption/reflection, or increase a diameter of asperities to form micron-order asperities thus providing an Ag layer having white color.

While an electrochemical device capable of providing a transparent state has been described, one of a pair of substrates may be opaque. When at least one substrate can be formed into a transparent and reflection or diffuse reflection state, it is possible to provide an electrochemical device capable of offering a variable state.

It is also possible to provide an electrochemical device such as a display or an ND filter showing stable properties as disclosed in the Unexamined Japanese Patent Application Publication No. 2018-017781, by using an electrochemical cell having stable properties.

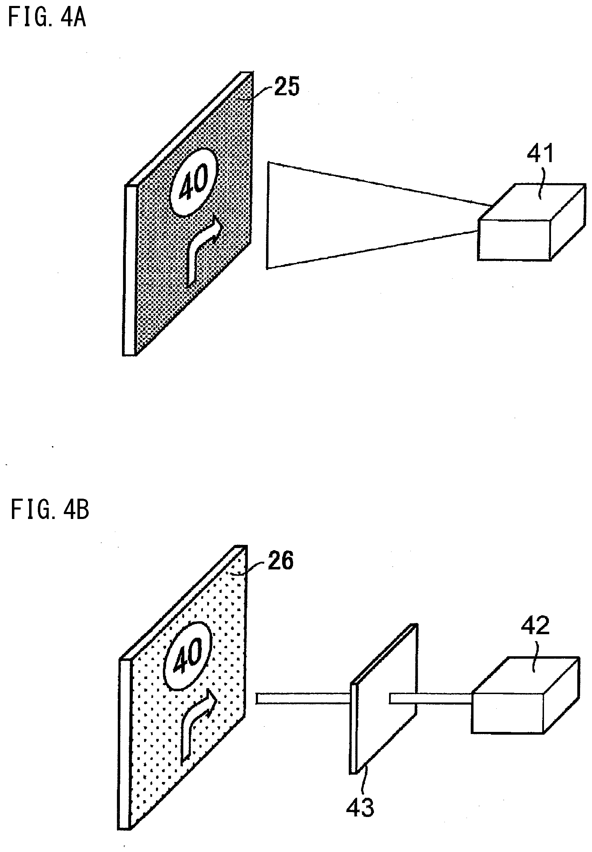

FIG. 4A is a perspective view where a mirror device is used for a variable combiner 25 of a head-up display (HUD). For example, a mirror device mounted on a window of a vehicle may be normally placed in a transparent state and may be operated as necessary for display to make observable an image projected from a projector 41. When there is no longer such a need, the mirror device may be restored to a transparent state.

FIG. 4B is a perspective view where a mirror device is used as an ND filter 43 for an HUD combiner 26 using a laser projector 42. Brightness control is difficult at a light source of the laser projector 42. To address this problem, a luminous flux projected by the laser projector 42 is attenuated to an appropriate brightness with an ND filter using a mirror device. This offers a glare-free display tailored to an outdoor brightness.

While this invention has been described in accordance with the example embodiment, the foregoing description is by no means restrictive. Persons skilled in the art will recognize that various changes, improvements or combinations may be made within the scope of the claims as appended.

## Claims

1. An electrochemical device (1) comprising a first substrate (10) and a second substrate (20) disposed face-to-face and each including an opposing electrode (12, 22) disposed on an opposing surface, and an electrolytic solution (30) provided between the first substrate (10) and a second substrate (20) containing a solvent, a supporting electrolyte, a mediator, and an electrodeposition material containing Ag wherein the mediator is a material that oxidises / reduces with electrochemically lower energy than Ag, and contains one or more of Mo, Sn, Nb, Sb, and Ti.

2. The electrochemical device (1) according to claim 1, wherein the mediator contains one or more of Mo, Nb, Sb, and Ti.

3. The electrochemical device (1) according to claim 1, wherein the mediator contains one or more of Mo[V], Sn[IV], Nb[V], Sb[V], and Ti[IV].

4. The electrochemical device (1) according to claim 3, wherein the mediator contains one or more of MoCl₅, SnCl₄, NbCl₅, SbCls, and TiI₄.

5. The electrochemical device (1) according to any one of claims 1 to 4, wherein the electrolytic solution (30) is transparent in a visible light range.

6. The electrochemical device (1) according to any one of claims 1 to 5, wherein the solvent has a melting point of -20°C or less and a boiling point of 100°C or more.

7. The electrochemical device (1) according to any one of claims 1 to 6, wherein a thickness of the electrolytic solution (30) is within the range of 1 µm to 1000 µm, both inclusive.

8. The electrochemical device (1) according to any one of claims 1 to 7, wherein the electrochemical device (1) is a component member of a combiner (25) or an ND filter (43).

## Patentansprüche

1. Elektrochemische Vorrichtung (1), die ein erstes Substrat (10) und ein zweites Substrat (20) aufweist, die einander gegenüberliegend angeordnet sind und jeweils eine gegenüberliegende Elektrode (12, 22) aufweisen, die auf einer gegenüberliegenden Oberfläche angeordnet ist, und eine Elektrolytlösung (30), die zwischen dem ersten Substrat (10) und einem zweiten Substrat (20) vorgesehen ist, die ein Lösungsmittel, einen unterstützenden Elektrolyten, einen Mediator und ein Ag enthaltendes galvanisches Material enthält, wobei der Mediator ein Material ist, das mit elektrochemisch geringerer Energie als Ag oxidiert/reduziert und ein oder mehrere der folgenden enthält: Mo, Sn, Nb, Sb und Ti.

2. Elektrochemische Vorrichtung (1) nach Anspruch 1, wobei der Mediator ein oder mehrere der folgenden enthält: Mo, Nb, Sb und Ti.

3. Elektrochemische Vorrichtung (1) nach Anspruch 1, wobei der Mediator ein oder mehrere der folgenden enthält: Mo[V], Sn[IV], Nb[V], Sb[V] und Ti[V].

4. Elektrochemische Vorrichtung (1) nach Anspruch 3, wobei der Mediator ein oder mehrere der folgenden enthält: MoCl₅, SnCl₄, NbCl5, SbCl₅ und TiI₄.

5. Elektrochemische Vorrichtung (1) nach einem der Ansprüche 1 bis 4, wobei die Elektrolytlösung (30) im Bereich des sichtbaren Lichts transparent ist.

6. Elektrochemische Vorrichtung (1) nach einem der Ansprüche 1 bis 5, wobei das Lösungsmittel einen Schmelzpunkt von -20°C oder weniger und einen Siedepunkt von 100°C oder mehr aufweist.

7. Elektrochemische Vorrichtung (1) nach einem der Ansprüche 1 bis 6, wobei eine Dicke der Elektrolytlösung (30) im Bereich von 1 µm bis 1000 µm ist, wobei beides eingeschlossen ist.

8. Elektrochemische Vorrichtung (1) nach einem der Ansprüche 1 bis 7, wobei die elektrochemische Vorrichtung (1) ein Bestandteil eines Kombinationselementes (25) oder eines ND-Filters (43) ist.

## Revendications

1. Dispositif électrochimique (1) comprenant un premier substrat (10) et un deuxième substrat (20) disposés face à face et comportant chacun une électrode opposée (12, 22) disposée sur une surface opposée, et une solution électrolytique (30) disposée entre le premier substrat (10) et un deuxième substrat (20) contenant un solvant, un électrolyte de support, un médiateur et un matériau d'électrodéposition contenant Ag, dans lequel le médiateur est un matériau qui oxyde ou réduit à une énergie électro-chimiquement plus faible qu'Ag et contient un ou plusieurs éléments parmi Mo, Sn, Nb, Sb et Ti.

2. Dispositif électrochimique (1) selon la revendication 1, dans lequel le médiateur contient un ou plusieurs parmi Mo, Nb, Sb et Ti.

3. Dispositif électrochimique (1) selon la revendication 1, dans lequel le médiateur contient un ou plusieurs parmi Mo[V], Sn[IV], Nb[V], Sb[V] et Ti [IV] .

4. Dispositif électrochimique (1) selon la revendication 3, dans lequel le médiateur contient un ou plusieurs parmi MoCl₅, SnCl₄, NbCl₅, SbCl₅ et TiI₄.

5. Dispositif électrochimique (1) selon l'une quelconque des revendications 1 à 4, dans lequel la solution électrolytique (30) est transparente dans une plage de lumière visible.

6. Dispositif électrochimique (1) selon l'une quelconque des revendications 1 à 5, dans lequel le solvant a un point de fusion de -20 °C ou moins et un point d'ébullition de 100 °C ou plus.

7. Dispositif électrochimique (1) selon l'une quelconque des revendications 1 à 6, dans lequel une épaisseur de la solution électrolytique (30) est comprise entre 1 µm et 1 000 µm, les deux valeurs étant incluses.

8. Dispositif électrochimique (1) selon l'une quelconque des revendications 1 à 7, dans lequel le dispositif électrochimique (1) est un élément composant d'un combinateur (25) ou d'un filtre ND (43).
